# FASCICULE DE BREVET EUROPEEN

(11) **EP 2 164 237 B1**
(45) Date de publication et mention de la délivrance du brevet: **11.10.2017**
(21) Numéro de dépôt: 09167677.5
(22) Date de dépôt: 12.08.2009
(51) Int. Cl.: H04M 3/493, H04M 1/656

(54) **Procédé et système de communication pour l'affichage d'un lien vers un service à partir d'une expression énoncée en cours de conversation**
Kommunikationsverfahren und system zur Anzeige einer Verbindung zu einem Service mit Hilfe eines beim Gespräch ausgesprochenen Ausdrucks
Communication method and system for displaying a link to a service according to an expression spoken in the course of a conversation

(30) Priorité: 11.09.2008 FR 0856126
(43) Date de publication de la demande: 17.03.2010
(73) Titulaire: ALCATEL LUCENT, 92100 Boulogne-Billancourt (FR)
(72) Inventeur: Pastor, Alain, 91620, NOZAY (FR); Boussard, Mathieu, 91620, NOZAY (FR)
(74) Mandataire: Berthier, Karine

(56) Documents cités:
- WO-A-01/13362
- WO-A-02/37470
- WO-A-2004/029831
- KR-B1- 100 803 900
- US-A1- 2007 249 406

## Description

La présente invention se rapporte au domaine de la gestion d'informations échangées au cours d'une conversation, en particulier à un procédé pour l'affichage d'un lien vers un service sélectionné à partir d'une expression énoncée en cours de conversation.

Au cours d'une conversation téléphonique ou d'une conversation effectuée via un logiciel de messagerie instantanée (aussi appelé « chat »), il n'est pas rare que les interlocuteurs aient besoin de vérifier ou d'obtenir une information relative aux propos qu'ils sont en train d'échanger. Il se peut également que l'avis d'une tierce personne concernant un point discuté dans la conversation soit souhaité.

Par exemple, lorsque le sujet de la conversation entre deux interlocuteurs consiste en la préparation d'un événement tel qu'une excursion sur un site touristique, il peut être intéressant que les interlocuteurs puissent, tout en restant en conversation, effectuer une consultation des prévisions météorologiques sur le site, effectuer une recherche de l'itinéraire à emprunter pour se rendre sur le site, procéder à une réservation à distance de places de train ou joindre une tierce personne pour lui demander si elle est intéressée par une telle excursion.

Pour consulter ces informations ou effectuer ces tâches, les interlocuteurs doivent, parallèlement au déroulement de la conversation via leur téléphone ou via une session de messagerie instantanée, activer des services par l'intermédiaire d'applications informatiques, telles que leur navigateur Web, installées sur leur système de communication.

Dans l'exemple précédemment évoqué, si en cours de conversation, un des interlocuteurs veut connaître les prévisions météorologiques, il doit, par exemple, faire appel à un service de météorologie. Pour ce faire, il ouvre son navigateur Web installé sur son système de communication et saisit une URL (initiales anglo-saxonnes mises pour « Universal Ressource Locator») correspondant à un site Web de prévision météorologique. Si l'interlocuteur désire, de plus, effectuer une réservation de billets de train à partir d'un service de réservation en ligne, il doit nécessairement saisir une nouvelle URL dans son navigateur Web correspondant à un site Web de réservation à distance. De même, si l'interlocuteur désire envoyer un mail à un ami pour lui proposer de se joindre à l'excursion, il devra activer un service de messagerie électronique disponible depuis son système de communication afin de pouvoir envoyer un mail.

Cependant, l'activation des services ou la consultation des informations résultant de l'exécution de ces services en cours de conversation ne sont pas aisées pour les interlocuteurs. En effet, comme évoqué dans notre exemple, à chaque fois qu'un interlocuteur désire lancer un service, il doit nécessairement ouvrir, depuis son système de communication, une application particulière et saisir manuellement des expressions qui auront pourtant déjà été énoncées au cours de la conversation.

Toutes ces manipulations sont d'autant plus fastidieuses qu'elles doivent d'une part, être réalisées tout en maintenant la conversation entre les interlocuteurs et, d'autre part, être répétées autant de fois qu'un interlocuteur a besoin d'un service différent au cours de la conversation.

On connaît du document US 2007/249406 un procédé et un système permettant de retrouver et d'afficher de l'information, telle qu'un lien internet, sur l'écran d'un terminal de communication à partir d'une fonction de reconnaissance vocale activée pendant une conversation vocale. Le procédé est cependant limité à la recherche d'informations sur internet et ne permet pas une analyse contextuelle offrant la possibilité de lancer des applications autres qu'Internet.

La présente invention vise à offrir plus de convivialité et de souplesse en permettant à un interlocuteur de se voir proposer, au cours de la conversation, des services en relation avec les propos échangés.

Dans ce but, un premier objet de l'invention concerne un procédé pour l'affichage d'un lien relatif à un service sur au moins un premier système de communication d'un premier utilisateur, ledit premier utilisateur étant en conversation avec un second utilisateur d'un second système de communication, ledit procédé comprenant pendant le déroulement de la conversation, les étapes de récupération d'une expression énoncée par le premier utilisateur sur le premier système de communication et d'affichage sur ledit premier système de communication dudit lien, caractérisé en ce qu'il comporte en outre les étapes suivantes:
- analyse sémantique de l'expression récupérée ;
- sélection d'un service à partir d'une liste de services préalablement enregistrés, en fonction au moins de l'expression analysée, chaque service de ladite liste étant susceptible d'être exécuté à partir au moins dudit premier système de communication,
l'étape d'affichage consistant alors à afficher sur ledit premier système de communication le lien permettant d'accéder audit service sélectionné.

La conversation peut être une conversation téléphonique. L'expression est alors énoncée vocalement par le premier utilisateur et l'étape de récupération de l'expression comprend un enregistrement vocal de l'expression énoncée et une transmission de l'enregistrement vocal à un serveur d'analyse de langage naturel.

Alternativement, la conversation peut être effectuée à partir d'un logiciel de messagerie instantanée. L'expression est alors énoncée par l'intermédiaire d'une saisie de l'expression dans une interface graphique d'un client de messagerie instantanée installé sur le premier système de communication et l'étape de récupération de l'expression comprend une transmission, par le client de messagerie instantanée, de ladite expression saisie à un serveur d'analyse de langage naturel.

De façon avantageuse, la sélection du service est également fonction d'au moins une préférence du premier utilisateur préalablement enregistrée.

Un second objet de l'invention concerne un système de communication pour permettre à un premier utilisateur d'effectuer une conversation avec un second utilisateur d'un second système de communication, caractérisé en ce qu'il comprend :
- un moyen de stockage pour stocker des services susceptibles d'être exécutés à partir au moins dudit système de communication ;
- un serveur d'analyse de langage naturel apte, sur réception d'une expression énoncée pendant le déroulement de la conversation sur ledit système de communication par ledit premier utilisateur , à sélectionner un service parmi les services stockés en fonction d'au moins une analyse sémantique de ladite expression récupérée ; et
- des moyens d'affichage pour afficher, pendant le déroulement de la conversation un lien vers ledit service sélectionné.

D'autres caractéristiques et avantages de l'invention apparaîtront à la lecture de la description qui va suivre en références aux dessins annexés dans lesquels :
- La figure 1 représente schématiquement une architecture préférée de deux systèmes de communication ainsi que leurs interactions en vue de l'affichage de liens vers des services selon l'invention.
- La figure 2 représente schématiquement différentes interactions entre un utilisateur, un client de messagerie et un serveur d'analyse de langage naturel d'un système de communication selon un mode préféré de l'invention.
- La figure 3 représente une interface graphique d'un client de messagerie instantanée sur laquelle des liens vers des services sont affichés conformément à l'invention.

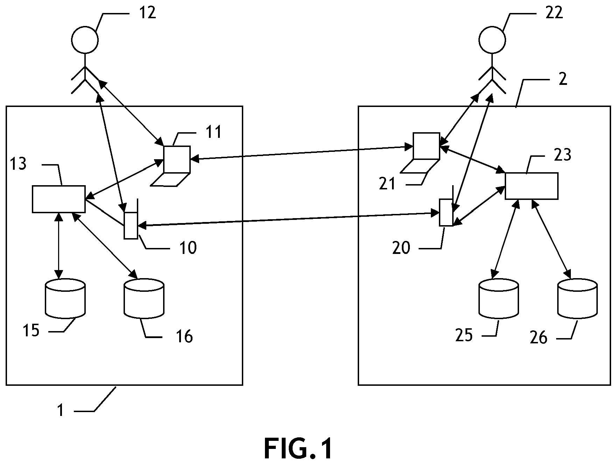

Comme le montre la figure 1, un premier système de communication 1 comporte classiquement un ensemble de terminaux 10, 11 tels qu'un téléphone 10 ou des ordinateur 11 reliés à un écran à partir desquels un utilisateur 12 peut effectuer une conversation avec l'un des terminaux 20, 21 d'un second utilisateur 22 appartenant à un second système de communication 2.

Le système de communication 1 peut également servir de point d'accès à des services. Ainsi, par exemple, lorsqu'un navigateur Web est installé sur l'ordinateur 11, un utilisateur 12 du système de communication 1 peut accéder à partir de cet ordinateur 11, entre autre, à des services de météorologie, de consultation de comptes bancaires ou de réservation de billets de transport, chaque service étant disponible sur des sites Internet accédés à partir du navigateur Web.

De même, si un client de messagerie de type Outlook® est installé sur le système de communication 1, l'utilisateur 12 pourra accéder à un service de messagerie et donc recevoir ou envoyer des messages électroniques de la part ou à destination d'autres utilisateurs.

Il peut également être envisageable qu'un service de conférence téléphonique puisse être lancé puis exécuté depuis un terminal 10, 11 du premier système de communication.

Conformément au procédé de l'invention, au cours d'une conversation, certaines expressions énoncées par l'utilisateur 12 sur le premier système de communication 1 sont récupérées et transmises à un serveur 13 d'analyse de langage naturel. Cette étape de récupération peut être accomplie lors d'une conversation vocale effectuée via un téléphone 10 ou bien lors d'une conversation qualifiée d'écrite effectuée via un client 14 de messagerie instantanée installé sur l'un des terminaux 11 du système de communication 1.

Le serveur 13 réalise alors une analyse sémantique des expressions récupérées et sélectionne un service à partir d'une liste de services préalablement enregistrés en fonction de l'analyse sémantique réalisée. Chaque service de la liste peut consister en l'un des services préalablement cités et susceptibles d'être exécutés à partir au moins d'un des terminaux 10, 11 du premier système de communication 1.

Un lien vers le service sélectionné est alors affiché sur une interface du système de communication 1.

En référence aux figures 1, 2 et 3, les différentes fonctionnalités du premier et du second système de communication ainsi que les différentes étapes mises en oeuvre pour l'affichage d'un lien vers un service en cours de communication vont être détaillées dans le cas où la conversation est une conversation effectuée à partir d'un logiciel de messagerie instantanée.

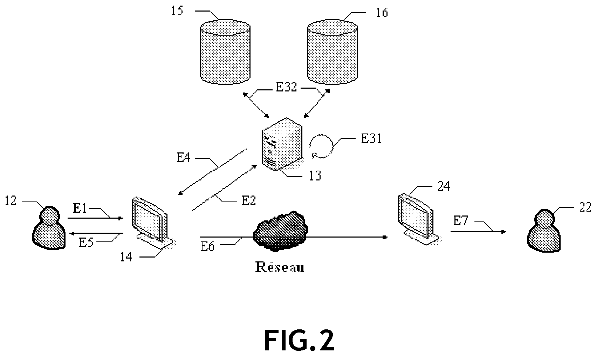

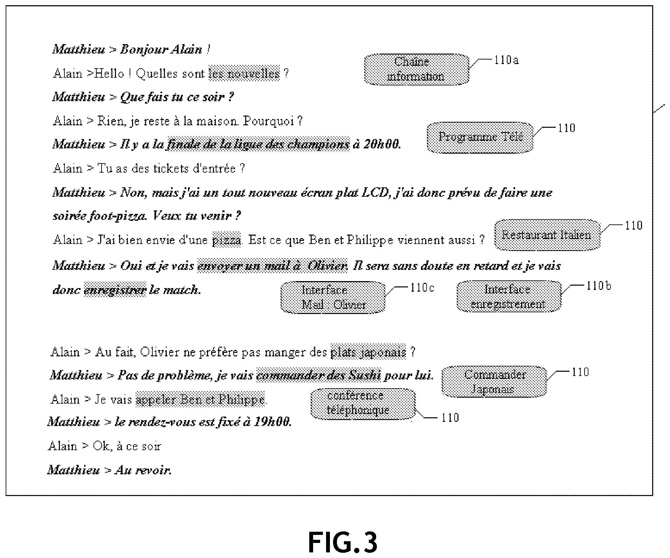

Comme représenté sur les figures 2 et 3, deux utilisateurs 12, 22 sont en conversation par l'intermédiaire d'un logiciel de messagerie instantanée. Une telle conversation est initialisée par l'ouverture d'une session partagée à partir des clients de messagerie instantanée 14, 24 respectivement installés sur les systèmes de communication 1, 2 des deux utilisateurs 12, 22.

La conversation est alors effectuée par saisie et envoi successifs d'expressions à partir des interfaces des clients de messagerie instantanée 14, 24 installés sur chaque système 1, 2. Les expressions saisies consistent classiquement en mots ou phrases. Habituellement, lorsqu'un utilisateur 12, 22 est en cours de conversation, l'interface d'un client de messagerie 14, 24 comporte deux zones d'affichage. Une première zone d'affichage permet d'afficher l'expression qui est en cours de saisie par l'utilisateur. Une seconde zone 100 est destinée à afficher l'ensemble des expressions envoyées et reçues par l'utilisateur au cours de la conversation.

Plus précisément, une fois l'expression saisie, l'utilisateur 12 peut l'envoyer instantanément (contrairement à une messagerie électronique) en actionnant une fonctionnalité d'envoi du client de messagerie instantanée 14. L'envoi se traduit, au niveau du premier utilisateur 12, par la disparition de l'expression saisie dans la première zone d'interface et son apparition dans la seconde zone d'interface 100.

De plus, l'envoi de l'expression provoque l'apparition de l'expression dans la seconde zone de l'interface du client de messagerie instantanée 24 du second utilisateur 22. Ce dernier peut alors lire, depuis son interface, l'expression qui lui a été envoyée par le premier utilisateur 12.

Tout au long de la conversation, les différentes expressions saisies et envoyées s'affichent respectivement sur les secondes zones d'interface des clients de messagerie instantanée de chaque utilisateur comme montré sur la figure 3.

Conformément au procédé de l'invention, après que l'utilisateur 12 a saisi une expression dans la première zone d'interface de son client de messagerie instantanée 14 (Etape E1 sur figure 2), l'actionnement de la fonctionnalité d'envoi déclenche également la transmission de l'expression vers un serveur 13 d'analyse de langage naturel (Etape E2 sur figure 2).

Le serveur 13 effectue alors une analyse sémantique de l'expression qui lui est transmise (Etape E31 sur figure 2) afin d'isoler dans un premier temps, des termes pertinents présents dans l'expression puis d'effectuer, dans un second temps, une sélection de service à partir des termes isolés (Etape E32 sur figure 2).

Pour ce faire, le serveur 13 d'analyse de langage naturel peut être relié avec une base de données 15 que nous appellerons référentiel sémantique de service. Ce référentiel 15 peut contenir une liste de services susceptibles d'être lancés et/ou exécutés à partir du système de communication 1 de l'utilisateur 12. A chaque service compris dans le référentiel peut être associé :
- une représentation arborescente dont chaque feuille correspond à un terme.
- un item (bouton, hyperlien, onglet ou tout autre élément graphique pouvant être affiché sur l'interface du client de messagerie instantanée) destiné à être affiché sur l'interface du client de messagerie instantanée.
- des méta-données comportant un ensemble de paramètres nécessaires au lancement du service depuis le système de communication 1.

Ces différentes informations dont les utilisations respectives seront détaillées ci-après, permettront de sélectionner et de proposer, au moyen de l'affichage d'un lien 110 sur la seconde zone 100 de l'interface du client de messagerie instantanée 14, un service en relation avec la conversation tenue par les utilisateurs 12, 22.

Chaque feuille de la représentation arborescente peut correspondre à un terme sémantique auquel il peut être associé un score élémentaire. Ce score élémentaire représente le degré de pertinence du terme de l'arborescence vis-à-vis du service auquel est associée l'arborescence. Une telle représentation permet une analyse ontologique.

Une fois que les termes pertinents ont été isolés à partir de l'analyse de l'expression transmise par le client de messagerie instantanée 14, le serveur 13 d'analyse de langage naturel est alors adapté à effectuer une comparaison entre les termes isolés et chacun des termes des différentes structures arborescentes. Lorsqu'un terme isolé correspond à l'un des termes d'une structure arborescente, le serveur 13 incrémente un score global pour le service associé à la structure arborescente dont l'un des termes coïncide avec un terme isolé.

Plus précisément, lorsqu'une expression est transmise au serveur 13 lors de l'activation de la fonctionnalité d'envoi par l'utilisateur 12, chaque service contenu dans le référentiel possède un score global nul. Puis, lorsqu'un terme d'une structure coïncide avec un terme isolé, le score global du service dont la structure arborescente possède un terme coïncidant avec le terme isolé, est incrémenté du score élémentaire associé au terme de la structure.

Grâce à l'utilisation d'une ontologie permettant de faire le lien entre un terme isolé et au moins un des termes de la structure, il n'est pas nécessaire que le terme isolé et le terme de la structure soient totalement similaires pour qu'il y ait une correspondance. En effet, par exemple, le terme isolé "nouvelles" (forme canonique "nouvelle") pourra coïncider avec le terme "information" de la structure par l'utilisation avantageuse d'une ontologie décrivant leur relation.

De cette façon, pour une expression transmise par le client de messagerie instantanée 14 au serveur 13, lorsque l'ensemble des termes isolés a été comparé, le serveur 13 sélectionne le service possédant le score global le plus élevé. Le service ainsi sélectionné est potentiellement celui le plus à même d'intéresser l'utilisateur 12 puisqu'il a été choisi en fonction d'une expression énoncée dans la conversation par l'utilisateur 12.

Une fois le service sélectionné, le serveur 13 transmet l'item et les méta-données associés au service sélectionné au client 14 de messagerie instantanée de l'utilisateur 12 ayant saisi l'expression (Etape E4 sur figure 2). Le client 14 de messagerie instantanée affiche alors, non seulement l'expression envoyée (préalablement saisie dans la première zone de l'interface) dans la seconde zone 100 de l'interface comme cela est le cas lors d'une conversation classique, mais aussi l'item 110 qui lui a été transmis (Etape E5 sur figure 2).

L'item 110 peut avantageusement être affiché dans une troisième zone de l'interface du client 14 de messagerie instantanée. Il peut tout aussi bien être affiché, comme cela est représenté sur la figure 3, dans la seconde zone 100 d'interface au niveau de l'affichage de l'expression à partir de laquelle le service a été sélectionné.

L'utilisateur 12 peut alors, pendant le déroulement de la conversation, sélectionner l'item 110 affiché en vue de lancer l'exécution du service sélectionné. Le service est correctement lancé depuis le système de communication 1 de l'utilisateur 12 grâce aux méta-données qui ont été transmises en même temps que l'item 110.

Avantageusement, l'item 110 correspond à un hyperlien constitué à partir des méta-données. Un tel hyperlien peut, par exemple, être l'affichage d'une URL d'une page d'un site Internet (par exemple : http://www.site_meteo.com), d'un chemin vers une application exécutable disponible sur le système de communication 1 de l'utilisateur 12 (par exemple : C:\dossier_applications_système1\ conf_telephonique.exe).

Ainsi lorsque l'utilisateur 12 clique sur un tel hyperlien, la page du site Internet s'affiche automatiquement dans le navigateur Web disponible sur le système de communication 1 ou l'application est automatiquement lancée et éventuellement exécutée. L'utilisateur 12 peut alors, par exemple, consulter un service de météorologie en ligne ou accéder à un service de conférence téléphonique depuis son système de communication 1 sans avoir besoin d'ouvrir par lui-même les applications nécessaires à l'exécution du service ni même de saisir les paramètres nécessaires au lancement du service.

Pour plus de convivialité au niveau de l'interface du client 14 de messagerie instantanée, l'item 110 peut être un onglet personnalisable dont l'activation provoque, de la même façon que ce qui a été décrit pour le lien hypertexte, le lancement et éventuellement la réalisation du service.

D'autre part, dans la mesure où le service est sélectionné à partir d'une expression énoncée en cours de conversation avec un second utilisateur 22, le service sélectionné peut également potentiellement intéresser le second utilisateur 22. De façon avantageuse, si le service peut également être exécuté à partir du second système de communication 2, un second lien permettant d'accéder au service sélectionné est affiché sur l'interface du second client 24 de messagerie instantanée du second utilisateur 22 en conversation avec le premier utilisateur 12.

Plus précisément, l'envoi de l'expression saisie sur le premier client 14 de messagerie instantanée vers le second client 24 de messagerie instantanée n'est effectué que lorsque le serveur 13 de langage naturel a transmis l'item 110 et les méta-données correspondant au service sélectionné au premier client 14 de messagerie instantanée comme cela a déjà été décrit. Une fois que le premier client 14 a reçu l'item 110 et les méta-données, l'expression, l'item 110 et les méta-données sont alors transmis au second client 24 de messagerie instantanée (Etape E6 sur figure 2). Ce dernier affiche alors l'expression envoyée comme cela est le cas pour une conversation classique ainsi que l'item 110 correspondant au service sélectionné (Etape E7 sur figure 2).

Ainsi le second utilisateur 22 pourra lancer le service automatiquement depuis son système de communication 2 en sélectionnant l'item 110 qui lui aura été transmis au cours de la conversation.

Comme antérieurement mentionné, les méta-données peuvent correspondre à des URL (http://www.site_meteo.com) pouvant être atteints depuis n'importe quel système de communication 1, 2. Cependant, les méta-données peuvent également consister en un chemin interne propre à un système de communication 1, 2 (C:\dossier_applications_système1\ conf_telephonique.exe) permettant d'accéder à une application nécessaire au lancement du service. L'emplacement d'une telle application pouvant varier d'un système de communication 1, 2 à un autre, le second client de messagerie instantanée 24 peut modifier une telle méta-données lorsqu'il la reçoit. Ainsi, la sélection du lien affiché sur l'interface du second client de messagerie instantanée pourra provoquer le lancement et/ou l'exécution du service correctement à partir d'une méta-donnée adaptée au second système de communication (C:\dossier _application_disponible_système2\ conf_telephonique.exe).

Dans les différents modes décrits jusqu'ici, la sélection d'un service s'effectuait uniquement en fonction d'une expression énoncée par le premier utilisateur 12. Or, parmi la liste des services présents dans le référentiel 15, plusieurs services peuvent être réalisés par l'intermédiaire de sites Internet proches ou équivalents ou par différentes applications disponibles sur le système de communication 1 de l'utilisateur 12.

Par exemple, un service de réservation de billet de train peut être exécuté à partir d'un site Internet d'une agence de voyage ou via le site d'une compagnie de transport. De même, joindre par téléphone un interlocuteur peut être effectué au moyen d'un service de téléphonie classique ou par l'intermédiaire d'un service de type voix sur IP.

Il peut donc alors être souhaitable d'affiner la sélection en fonction de préférences de l'utilisateur 12 préalablement enregistrées.

Pour ce faire, le serveur d'analyse 13 de langage naturel peut également être relié à une seconde base de données 16 contenant des profils utilisateur. Un profil utilisateur peut avantageusement comprendre :
- une liste de sites ou de pages Internet favoris à partir desquels l'utilisateur désire préférentiellement consulter une information ou réaliser une action ;
- une liste de contact d'utilisateurs contenant, entre autre, pour chaque contact, le nom, le prénom et les différentes applications par lesquelles le contact peut être joint (messagerie électronique, messagerie instantanée, téléphonie classique, téléphonie sur IP, conférence téléphonique...) ainsi que les différentes informations nécessaires pour entrer en communication avec ces contacts par l'intermédiaire des applications précédemment citées ;

Ainsi, s'il est déterminé à partir de l'analyse de l'expression énoncée que l'utilisateur 12 peut potentiellement avoir besoin de consulter un service de réservation de billets en ligne, le serveur d'analyse peut également consulter les préférences de l'utilisateur 12 préalablement stockées pour sélectionner un service de réservation de billet de train et non un service de réservation de billet d'avion, les préférences de l'utilisateur 12 contenant, parmi les sites favoris, l'adresse du site Internet d'une compagnie ferroviaire.

L'utilisation d'une base de données 16 contenant des préférences de l'utilisateur permet donc une personnalisation des services proposés à l'utilisateur 12. Cependant, les services contenus dans le référentiel ne sont pas nécessairement accessibles ou réalisables depuis le système de communication 2 du second utilisateur 22. De plus, les préférences des différents utilisateurs sont souvent très différentes.

Il peut donc être avantageux de proposer, à partir de l'expression énoncée par le premier utilisateur 12, un second service non pas en fonction de préférences du premier utilisateur 12 mais en fonction des préférences du second utilisateur 22. Ainsi, selon un mode de réalisation, un second service est sélectionné à partir d'une seconde liste de services préalablement enregistrés, chaque service de la seconde liste étant susceptible d'être exécuté à partir du second système de communication 2. La sélection du service s'effectue en fonction d'une analyse de l'expression énoncée par le premier utilisateur 12 et de préférences du second utilisateur 22 préalablement stockées.

Dans le cadre d'une conversation par l'intermédiaire d'un logiciel de client de messagerie instantanée, il peut être envisagé que lorsque l'expression saisie par le premier utilisateur 12 est envoyée depuis le premier client 14 de messageries instantanée au second 24 client de messagerie instantanée, le second client 24 transmette l'expression à un serveur 23 d'analyse de langage naturel présent sur le second système de communication 2. Le serveur 23 effectue alors dans un premier temps une analyse sémantique de l'expression reçue et dans un second temps la sélection d'un service à partir d'une liste de services contenus dans un second référentiel 25 sémantique de services et une base de données 26 comprenant des préférences utilisateurs du second utilisateur 22.

Une fois la sélection effectuée, le serveur 23 transmet un lien vers le service au second client 24 de messagerie instantanée qui l'affiche, en même temps que l'expression reçue depuis le premier client de messagerie instantanée 14. En procédant de la sorte, chacun des utilisateurs 12, 22 participant à la conversation peut voir sur l'interface de son client de messagerie instantanée 14, 24 un lien personnalisé vers un service et lancer aisément le service à partir du lien affiché.

La figure 3 représente une interface graphique d'un client de messagerie instantanée sur laquelle des liens vers des services ont été affichés tout au long d'une conversation entre deux utilisateurs (Matthieu et Alain).

Comme montré sur la figure 3, l'expression saisie « Hello ! Quelles sont les nouvelles » a été transmise au serveur 13 d'analyse de langage naturel. Ce dernier a extrait les termes « les nouvelles » et à sélectionner un service en relation avec ce terme à l'utilisateur. Le client de messagerie a alors affiché un lien 110a intitulé « Chaîne information ».

Si l'utilisateur active ce lien 110a, il pourra être dirigé, par exemple, vers la page d'accueil du site Internet d'une chaîne d'information. Le service peut également consister en la réception des dernières mises à jours sur le site Internet de la chaîne d'information via un flux RSS (initiales anglo-saxonnes mises pour « Rich Site Summary »). La chaîne d'information pourra être choisie en fonction des préférences de l'utilisateur préalablement stockées.

De même le terme « enregistrer » a provoqué l'affichage de l'item 110b « Interface enregistrement » qui, s'il est activé par l'utilisateur peut déclencher une application disponible sur le système de communication à partir de laquelle un enregistrement d'un programme télévisuel peut être programmé ou effectué.

L'analyse des termes « envoyer un mail à Olivier » permet, de façon similaire, de proposer à l'utilisateur un lien 110c vers une application de messagerie type Outlook® disponible sur le système de communication pour envoyer un mail à la personne nommée Olivier.

Bien que les différentes caractéristiques et avantages de l'invention aient été décrits en se référant à une conversation effectuée à partir de clients de messagerie instantanée, l'invention n'est pas limitée à un tel type de conversation. L'invention peut également être, entre autre, réalisée lorsque la conversation est une conversation téléphonique.

Lorsque la conversation est une conversation vocale effectuée à partir de terminaux téléphoniques 10, 20, le système de communication 1 procède à un enregistrement de la conversation et transmet en continue l'enregistrement au serveur 13 d'analyse de langage naturel. Le serveur 13 est alors capable de sélectionner uniquement les propos énoncés par le premier utilisateur 1 sur son terminal téléphonique 10 et effectue une sélection du service en effectuant les étapes telles que précédemment décrites.

De plus, l'établissement d'une conversation téléphonique peut déclencher une application d'affichage (non représentée) respectivement au niveau des premier et second systèmes de communication 1, 2. Le serveur 13 d'analyse est alors adapté à transmettre les liens relatifs aux services sélectionnés à l'application qui se charge d'afficher les liens sur une interface graphique du système de communication 1, 2 tout au long de la conversation téléphonique. L'affichage s'effectue, par exemple, sur l'interface graphique de des ordinateurs 11 et 21.

## Revendications

1. Procédé pour l'affichage d'un lien (110) relatif à un service sur au moins un premier système de communication (1) d'un premier utilisateur (12), ledit premier utilisateur (12) étant en conversation avec un second utilisateur (22) d'un second système de communication (2), ledit procédé comprenant pendant le déroulement de la conversation, les étapes de récupération (E2) d'une expression énoncée par le premier utilisateur (12) sur le premier système de communication (1) et d'affichage (E5) sur ledit premier système de communication dudit lien (110), **caractérisé en ce qu'**il comporte en outre les étapes suivantes:
- analyse sémantique (E31) de l'expression récupérée ;
- sélection (E32) d'un service à partir d'une liste de services préalablement enregistrés, en fonction au moins de l'expression analysée, chaque service de ladite liste étant susceptible d'être exécuté à partir au moins dudit premier système de communication,
l'étape d'affichage (E5) consistant alors à afficher sur ledit premier système de communication le lien (110) permettant d'accéder audit service sélectionné.

2. Procédé selon la revendication 1, **caractérisé en ce que**, la conversation étant une conversation téléphonique, et l'expression étant énoncée vocalement par le premier utilisateur (12), l'étape de récupération (E2) de l'expression comprend :
- un enregistrement vocal de l'expression énoncée ;
- une transmission de l'enregistrement vocal à un serveur (13) d'analyse de langage naturel.

3. Procédé selon la revendication 1, **caractérisé en ce que**, la conversation étant une conversation effectuée à partir d'un logiciel de messagerie instantanée, et l'expression étant énoncée par l'intermédiaire d'une saisie de l'expression dans une interface graphique d'un client (14) de messagerie instantanée installé sur ledit premier système de communication (1) l'étape de récupération de l'expression comprend :
- une transmission, par le client (14) de messagerie instantanée, de ladite expression saisie à un serveur (13) d'analyse de langage naturel.

4. Procédé selon l'une quelconque des revendications précédentes, **caractérisé en ce que** ladite sélection du service est également fonction d'au moins une préférence du premier utilisateur (12) préalablement enregistrée.

5. Procédé selon l'une quelconque des revendications 1 à 3, **caractérisé en ce que**, le service sélectionné pouvant également être exécuté à partir au moins du second système de communication (2), ledit procédé comprend également l'affichage sur ledit second système de communication (2) d'un second lien (110) permettant d'accéder audit service sélectionné.

6. Procédé selon l'une quelconque des revendications 1 à 4, **caractérisé en ce qu'**il comprend, en outre, les étapes de :
- sélection d'un second service à partir d'une seconde liste de services préalablement enregistrés, en fonction de l'expression analysée et d'au moins une préférence du second utilisateur (22) préalablement enregistrée, chaque service de ladite seconde liste étant susceptible d'être exécuté à partir dudit second système de communication (2) ;
- affichage sur ledit second système de communication (2) d'un lien (110) permettant d'accéder audit second service sélectionné.

7. Procédé selon la revendication 6, **caractérisé en ce que** le premier, respectivement le second, lien (110) est affiché sous la forme d'un hyperlien dont l'activation déclenche l'exécution dudit service sélectionné.

8. Procédé selon la revendication 6, **caractérisé en ce que** le premier, respectivement le second, lien (110) est affiché sous la forme d'un onglet dont l'activation déclenche l'exécution dudit service sélectionné.

9. Système de communication (1) pour permettre à un premier utilisateur (12) d'effectuer une conversation avec un second utilisateur (22) d'un second système de communication (2), **caractérisé en ce qu'**il comprend:
- un moyen (15) de stockage pour stocker des services susceptibles d'être exécutés à partir au moins dudit système de communication (1) ;
- un serveur (13) d'analyse de langage naturel apte, sur réception d'une expression énoncée pendant le déroulement de la conversation sur ledit système de communication (1) par ledit premier utilisateur (12), à sélectionner un service parmi les services stockés en fonction d'au moins une analyse sémantique de ladite expression récupérée ; et
- des moyens d'affichage (11 ; 100) pour afficher, pendant le déroulement de la conversation un lien vers ledit service sélectionné.

10. Système de communication (1) selon la revendication 9, **caractérisé en ce qu'**il comprend un second moyen (16) de stockage pour stocker des préférences dudit premier utilisateur, et **en ce que** le serveur (13) d'analyse de langage naturel est également apte à sélectionner ledit service en fonction des préférences stockées dans le second moyen (16) de stockage.

## Patentansprüche

1. Verfahren zum Anzeigen einer Verbindung (110), die in Bezug steht zu einem Dienst von mindestens einem Kommunikationssystem (1) eines ersten Benutzers (12), wobei besagter erster Benutzer (12) eine Konversation mit einem zweiten Benutzer (22) eines zweiten Kommunikationssystems (2) führt, wobei besagtes Verfahren während des Verlaufs der Konversation die Schritte der Wiederherstellung (E2) eines von dem ersten Benutzer (12) geäußerten Ausdrucks im ersten Kommunikationssystem (1) und des Anzeigens (E5) besagter Verbindung (110) in besagtem ersten Kommunikationssystem umfasst und **dadurch gekennzeichnet ist, dass** es weiterhin die folgenden Schritte umfasst:
- semantische Analyse (E31) des wiederhergestellten Ausdrucks;
- Auswählen (E32) eines Dienstes aus eine Liste vorher gespeicherter Dienste auf Grundlage des analysierten Ausdrucks, wobei jeder Dienst auf besagter Liste ausführbar ist von mindestens besagtem ersten Kommunikationssystem,
wobei der Schritt des Anzeigens (E5) dann in der Anzeige in besagtem ersten Kommunikationssystem der Verbindung (110) für den Zugriff auf besagten ausgewählten Dienst besteht.

2. Verfahren nach Anspruch 1, **dadurch gekennzeichnet, dass** die Konversation eine Telefonkonversation ist und der Ausdruck mündlich geäußert wird von dem ersten Benutzer (12), wobei der Schritt der Wiederherstellung (E2) des Ausdrucks umfasst:
- eine Sprachaufzeichnung des geäußerten Ausdrucks;
- eine Übertragung der Sprachaufzeichnung auf einen natürlichen Sprachanalyseserver (13).

3. Verfahren nach Anspruch 1, **dadurch gekennzeichnet, dass** die Konversation von einer Instant Messaging Software durchgeführt wird und der Ausdruck geäußert wird mittels der Eingabe des Ausdrucks in eine grafische Benutzerschnittstelle eines Instant Messanger Clients (14), der in besagtem ersten Kommunikationssystem (1) installiert ist, wobei der Schritt des Wiederherstellens des Ausdrucks umfasst:
- eine Übertragung mittels des Instant Messaging Clients (14) von besagtem eingegebenen Ausdruck auf einen natürlichen Sprachanalyseserver (13).

4. Verfahren nach einem beliebigen der vorhergehenden Ansprüche, **dadurch gekennzeichnet, dass** besagte Auswahl des Dienstes auch auf mindestens einer vorher gespeicherten Präferenz des ersten Benutzers (12) beruht.

5. Verfahren nach einem beliebigen der Ansprüche 1 bis 3, **dadurch gekennzeichnet, dass** der ausgewählte Dienst auch ausführbar ist mindestens von dem zweiten Kommunikationssystem (2), wobei besagtes Verfahren weiterhin umfasst das Anzeigen auf besagtem zweiten Kommunikationssystem (2) einer zweiten Verbindung (110) unter Ermöglichen des Zugriffs auf besagten ausgewählten Dienst.

6. Verfahren nach einem beliebigen der Ansprüche 1 bis 4, **dadurch gekennzeichnet, dass** es weiterhin die folgenden Schritte umfasst:
- Auswählen eines zweiten Dienstes aus einer zweiten Liste von vorher gespeicherten Diensten auf Grundlage des analysierten Ausdrucks und der mindestens einen vorher gespeicherten Präferenz des zweiten Benutzers (22), wobei jeder Dienst von besagter zweiter Liste ausführbar ist von besagtem zweiten Kommunikationssystem (2) aus;
- Anzeige auf besagtem zweiten Kommunikationssystem (2) einer Verbindung (110), die den Zugriff auf besagten ausgewählten Dienst erlaubt.

7. Verfahren nach Anspruch 6, **dadurch gekennzeichnet, dass** die erste bzw. die entsprechende zweite Verbindung (110) angezeigt wird in der Form einer Hyperverbindung, deren Aktivierung die Ausführung von besagtem ausgewählten Dienst auslöst.

8. Verfahren nach Anspruch 6, **dadurch gekennzeichnet, dass** die erste bzw. die entsprechende zweite Verbindung (110) angezeigt wird in der Form eines Reiters, dessen Aktivierung die Ausführung von besagtem ausgewählten Dienst auslöst.

9. Kommunikationssystem (1), um einem ersten Benutzer (12) die Durchführung einer Konversation mit einem zweiten Benutzer (22) eines zweiten Kommunikationssystems (2) zu ermöglichen, **dadurch gekennzeichnet, dass** es umfasst:
- ein Speichermittel (15) zum Speichern von Diensten, die ausführbar sind mindestens von dem besagten Kommunikationssystem (1);
- einen natürlichen Sprachanalyseserver (13), der fähig ist, nach Empfang eines während des Verlaufs der Konversation in besagtem Kommunikationssystem (1) von besagtem ersten Benutzer (12) geäußerten Ausdrucks, einen Dienst aus den gespeicherten Diensten auszuwählen auf Grundlage mindestens der semantischen Analyse von besagtem wiederhergestellten Ausdruck; und
- ein Anzeigemittel (11; 100) zum Anzeigen, während des Verlaufs der Konversation, einer Verbindung zu besagtem ausgewählten Dienst.

10. Kommunikationssystem (1) nach Anspruch 9, **dadurch gekennzeichnet, dass** es ein zweites Speichermittel (16) umfasst zum Speichern der Präferenzen von besagtem ersten Benutzer, und dadurch, dass besagter natürlicher Sprachanalyseserver (13) ebenfalls in der Lage ist, besagten Dienst auszuwählen auf Grundlage der Präferenzen, die im zweiten Speichermittel (16) gespeichert sind.

## Claims

1. A method for displaying a link (110) related to a service on at least one communication system (1) of a first user (12), said first user (12) being in conversation with a second user (22) of a second communication system (2), said method comprising, during the course of the conversation, the steps of retrieving (E2) an expression stated by the first user (12) on the first communication system (1) and of displaying (E5) said link (110) on said first communication system, **characterized in that** it further comprises the following steps:
- semantic analysis (E31) of the retrieved expression;
- selecting (E32) a service from a list of previously saved services, based on at least the analyzed expression, each service on said list being executable from at least said first communication system,
the step of displaying (E5) then consisting of displaying on said first communication system the link (110) for accessing said selected service.

2. A method according to claim 1, **characterized in that**, the conversation being a telephone conversation, and the expression being stated vocally by the first user (12), the step of retrieving (E2) the expression comprises:
- a voice recording of the stated expression;
- a transmission of the voice recording to a natural language analysis server (13).

3. A method according to claim 1, **characterized in that**, the conversation being conducted from instant messaging software, and the expression being stated by means of inputting the expression into a graphical user interface of an instant messaging client (14) installed on said first communication system (1), the step of retrieving the expression comprises:
- a transmission, by the instant messaging client (14), of said inputted expression to a natural language analysis server (13).

4. A method according to any one of the preceding claims, **characterized in that** said selection of the service is also based on at least one previously saved preference of the first user (12).

5. A method according to any one of the claims 1 to 3, **characterized in that**, the selected service being also executable from at least the second communication system (2), said method further comprises the displaying on said second communication system (2) of a second link (110) enabling access to said selected service.

6. A method according to any one of the claims 1 to 4, **characterized in that** it further comprises the steps of:
- selecting a second service from a second list of previously saved services, based on the analyzed expression and on at least one previously saved preference of the second user (22), each service of said second list being executable from said second communication system (2);
- displaying on said second communication system (2) a link (110) enabling access to said selected service.

7. A method according to claim 6, **characterized in that** the first, or respectively second, link (110) is displayed in the form of a hyperlink whose activation triggers the execution of said selected service.

8. A method according to claim 6, **characterized in that** the first, or respectively second, link (110) is displayed in the form of a tab whose activation triggers the execution of said selected service.

9. A communication system (1) for enabling a first user (12) to conduct a conversation with a second user (22) of a second communication system (2), **characterized in that** it comprises:
- a storage means (15) for storing services that are executable from at least said communication system (1);
- a natural language analysis server (13) capable, upon receipt of an expression stated during the course of the conversation on said communication system (1) by said first user (12), of selecting a service from among the stored services based on at least one semantic analysis of said recovered expression; and
- display means (11; 100) for displaying, during the course of the conversation, a link to said selected service.

10. A communication system (1) according to claim 9, **characterized in that** it comprises a second storage means (16) for storing preferences of said first user, and **in that** the natural language analysis server (13) is also capable of selecting said service based on the preferences stored in the second storage means (16).
